# EUROPÄISCHE PATENTANMELDUNG

(11) **EP 2 853 432 A1**
(43) Veröffentlichungstag der Anmeldung: **01.04.2015**
(21) Anmeldenummer: 13465504.2
(22) Anmeldetag: 26.09.2013
(51) Int. Cl.: B60K 26/02

(54) **Pedalvorrichtung für ein Kraftfahrzeug mit mehreren Kick-Down Punkten**

(71) Anmelder: Conti Temic Microelectronic GmbH, 90411 Nürnberg (DE)
(72) Erfinder: Ciprian, Dragoi, 557261 Selimbar (RO); Zell, Andreas, 90411 Nürnberg (DE); Leone, Carmelo, 85354 Freising (DE)

(57) **Zusammenfassung**

Die Erfindung betrifft eine Pedalvorrichtung (1, 100) für ein Kraftfahrzeug, insbesondere zur Steuerung einer Fahrzeuggeschwindigkeit, aufweisend eine Pedalplatte (2), die zwischen einer Nulllage und einer Endlage um eine erste Drehachse (20) um einen Winkel (α) drehbar ist, mindestens eine Rückstellfeder (30a, 30b) zur Rückstellung der Pedalplatte (2) in die Nulllage, ein Übertragungselement (3), das mit der Pedalplatte (2) gekoppelt ist und um eine zweite zur ersten Drehachse (20) parallele Drehachse (31) drehbar ist, und eine Hemmeinrichtung (5, 150) zum Aufbringen einer der Drehbewegung der Pedalplatte (2) entgegenwirkenden punktuellen Hemmkraft, dadurch gekennzeichnet, dass die Hemmeinrichtung (5, 150) in Abhängigkeit von der Winkelposition der Pedalplatte (2) zuschaltbar ist. Ferner betrifft die Erfindung ein Verfahren zum Betreiben einer erfindungsgemäßen Pedalvorrichtung.

## Beschreibung

Die Erfindung richtet sich auf eine Pedalvorrichtung für ein Kraftfahrzeug, insbesondere zur Steuerung einer Fahrzeuggeschwindigkeit, gemäß dem Oberbegriff des Anspruchs 1 sowie ein Verfahren zum Betreiben einer Pedalvorrichtung gemäß dem Oberbegriff des Anspruchs 18.

Aus dem Stand der Technik sind Pedale bekannt, die bei einer bestimmten Position der Pedale einen erhöhten Widerstand aufweisen und durch eine höhere Pedalkraft überwunden werden kann. Umgangssprachlich ist dieser Mechanismus auch als Kick-down Mechanismus bekannt. Die Kick-down Punkte dienen unter anderem dazu dem Fahrer ein haptisches Feedback darüber zu geben, dass der Pedalhub ausgeschöpft bzw. nahezu ausgeschöpft ist. Des Weiteren kann das Übertreten eines Kick-down Punktes auch als Befehl an das Kraftfahrzeug zum Schalten des Getriebes verwendet werden.

Aufgabe der Erfindung ist es, eine Pedalvorrichtung mit erweiterten Kick-Down Funktionen aufzuzeigen.

Die Aufgabe wird erfindungsgemäß durch eine Pedalvorrichtung mit den Merkmalen des Anspruchs 1 und ein Verfahren zum Betrieb der Pedalvorrichtung mit den Merkmalen des Anspruchs 18 gelöst.

Bei einer Pedalvorrichtung der eingangs näher bezeichneten Art wird die Aufgabe erfindungsgemäß dadurch gelöst, dass die Hemmeinrichtung in Abhängigkeit von der Winkelposition der Pedalplatte zuschaltbar ist. Die Erfindung basiert auf den Grundgedanken, dass mittels der zuschaltbaren Hemmeinrichtung ein zusätzlicher Kick-down Punkt geschaffen wird, worüber ein weiteres haptisches Signal an den Fahrer ausgegeben werden kann. Die Erfindung hat des Weiteren den Vorteil, dass der zusätzliche Kick-down Punkt variabel zuschaltbar ist und somit je nach Fahrsituation bzw. Fahrmodus eingesetzt werden kann. Beispielsweise kann zusätzliche Kick-down Punkt dazu genutzt werden eine kraftstoffsparende Fahrweise zu unterstützen.

Bei einem Verfahren zum Betrieb einer Pedalvorrichtung der eingangs näher bezeichneten Art wird die Aufgabe erfindungsgemäß dadurch gelöst, dass geprüft wird, ob die Pedalplatte sich innerhalb eines vorgegebenen Winkelbereichs befindet, und eine zuschaltbare Hemmeinrichtung zum Aufbringen einer der Drehbewegung der Pedalplatte entgegenwirkenden Hemmkraft zugeschaltet wird, wenn sich die Pedalplatte innerhalb eines vorgegebenen Winkelbereichs befindet. Die zuschaltbare Hemmeinrichtung wird vorteilhafterweise nur dann zugeschaltet, wenn eine Interaktion mit der Pedalplatte erfolgen kann. Andernfalls wird die Hemmeinrichtung in einer Position gehalten, wo die Bewegung der Pedalplatte nicht gestört wird.

In einer Ausgestaltung sieht die Erfindung vor, dass die Hemmeinrichtung in Abhängigkeit von der Winkelposition und der Drehrichtung der Pedalplatte zuschaltbar ist.

In einer Weiterentwicklung sieht die Erfindung vor, dass die Hemmeinrichtung ein verstellbares Stützelement aufweist, das in die Drehbewegungstrajektorie des Übertragungselements verstellbar ist.

Es ist besonders zweckmäßig, dass die Hemmeinrichtung einen Aktuator aufweist, der an mehreren Haltepositionen stromlos ist. Die Pedalvorrichtung ist auf diese Weise besonders energiesparsam betreibbar. Gleichzeitig kann auf diese Weise sichergestellt werden, dass die Hemmeinrichtung in den Haltepositionen weitestgehend keine Wärme erzeugt und somit auch ohne passive oder aktive Kühlung betreibbar ist.

Insbesondere zeichnet sich die Erfindung dadurch aus, dass der Aktuator ein linearer bistabiler Aktuator ist. Bistabile Aktuatoren haben sich für diese Anwendung als besonders vorteilhaft erwiesen, da sie nur beim Verstellen eines Stellelements, bspw. ein Stößel, in eine andere Position Energie aufnehmen aber darüber hinaus stromlos betreibbar sind. Sie können beispielsweise ein magnetisch verstellbares Stellelement aufweisen, das in vorgesehenen Positionen mechanisch oder mittels Permanentmagneten ohne zusätzliche Energiezufuhr arretierbar ist.

In einer Weiterentwicklung sieht die Erfindung vor, dass das Stützelement blattfederförmig ausgebildet ist und mindestens einen gebogenen Abschnitt zum Ausüben der Hemmkraft aufweist, wodurch sich die Erfindung auf eine besonders kostengünstige Weise umsetzbar ist.

Es ist besonders zweckmäßig, dass der gebogene Abschnitt an einem freien Ende des Stützelements angeordnet ist.

Insbesondere ist dabei vorgesehen, dass gebogene Abschnitt in einem Winkelbereich von 80° bis 120° zur Federfläche des Stützelements gebogen ist, so dass auf diese Weise die notwendige Kraft zum Überwinden der Hemmkraft variiert werden kann.

In einer weiteren Ausgestaltung sieht die Erfindung vor, dass das Stützelement um eine zur ersten Drehachse parallel verlaufende dritte Drehachse drehbar gelagert ist.

Gemäß eines weiteren Aspekts der Erfindung ist vorgesehen, dass das der Aktuator einen Stützkörper aufweist, der das Stützelement flächig abstützt. Die Ausführungsform eignet sich besonders dazu, um hohe Hemmkräfte aufbringen zu können.

In einer weiteren Ausgestaltung sieht die Erfindung vor, dass der Aktuator eine verstellbare Welle mit einem Stützelement aufweist.

Hierbei ist es besonders vorteilhaft, dass das Stützelement blockförmig ausgebildet ist und eine Kontaktfläche aufweist, an die ein Kontaktbereich des Übertragungselements flächig anlegbar ist.

In einer Weiterentwicklung sieht die Erfindung vor, dass das Übertragungselement mindestens zwei voneinander unabhängig um die zweite Drehachse drehbare Glieder aufweist, und dass mittels des zweiten Glieds nur eine zur Endlage gerichtete Kraft auf das erste Glied übertragbar ist, und dass mittels des ersten Glieds nur eine zur Nulllage gerichtete Kraft übertragbar ist.

Dabei ist besonders vorteilhaft, dass die Pedalplatte nur mit dem zweiten Glied des Übertragungselements gekoppelt ist.

Insbesondere ist es zweckmäßig, dass das zweite Glied einen Vorsprung aufweist, das in eine Aussparung am ersten Glied eingreift, um eine zur Endlage gerichtete Kraft auf das erste Glied auszuüben. Bevorzugterweise korrespondiert die Form des Vorsprungs zur Form der Aussparung. Auf diese Weise kann die Rückführung der Pedalplatte in die Ausgangslage auch dann sichergestellt werden, wenn die Hemmeinrichtung ungewünscht in der zugeschalteten Position verharrt und das Übertragungselement dadurch in der Bewegung in die Ausganslage zumindest teilweise blockiert wird.

Ferner wird die Erfindung dadurch weitergebildet, dass die Hemmeinrichtung vor Erreichen einer Winkelposition zuschaltbar ist, der etwa die Hälfte einer maximalen Motorleistung des Kraftfahrzeugs entspricht. Diese Winkelposition entspricht je nach Konfiguration des Motors oder Antriebsstrangs beispielsweise 30% des Pedalhubs der Pedalvorrichtung. Auf diese Weise wird sichergestellt, dass die Hemmeinrichtung rechtzeitig zugeschaltet wird.

In einer Weiterentwicklung der Erfindung ist eine Steuereinrichtung zum Steuern des Aktuators vorgesehen, wobei mittels der Steuereinrichtung die Temperatur des Aktuators anhand einer Aktuatorspannung und eines Aktuatorstroms ermittelbar ist. Bei der Aktuatorspannung bzw. dem Aktuatorstrom kann es sich um die die vorgegebene Spannung oder den vorgegebenen Strom im Stromleiter des Aktuators handeln, bspw. in den Wicklungen des Stators. Alternativ ist es auch denkbar die tatsächlich vorherrschende Spannung bzw. Strom zu ermitteln. Es wird hierbei die Temperaturabhängigkeit des elektrischen Widerstandes des Stromleiters zunutze gemacht, der über die bekannte Spannung und den Strom errechnet werden kann. Auf diese Weise kann die Temperatur am Aktuator ohne die Verwendung eines Temperatursensors ermittelt werden.

Das erfindungsgemäße Verfahren zeichnet sich dadurch aus, dass die Hemmeinrichtung im zugeschalteten Zustand befindet, wenn sich die Pedalplatte innerhalb eines Winkelbereichs befindet, und andernfalls sich im nicht zugeschalteten Zustand befindet.

Die Erfindung wird nachfolgend anhand der Ausführungsbeispiele und der beigefügten Zeichnungen näher beschrieben. Es zeigen:
- Figur 1a, b: eine perspektivische Ansicht auf ein erstes Ausführungsbeispiel einer erfindungsgemäßen Pedalvorrichtung mit einem Teilschnitt des Gehäuses von zwei gegenüberliegenden Seiten,
- Figur 2: eine vergrößerte Darstellung der Hemmeinrichtung des ersten Ausführungsbeispiels,
- Figur 3 a-c: eine Schrittweise Darstellung der Pedalbewegung des ersten Ausführungsbeispiels von der Nulllage in die Endlage,
- Figur 4: eine vergrößerte Darstellung der Wirkweise der Hemmeinrichtung,
- Figur 5a: eine perspektivische Darstellung des ersten Ausführungsbeispiels von zwei unterschiedlichen Seiten bei Auftreten eines Fehlers in der Hemmeinrichtung,
- Figur 6: eine perspektivische Ansicht auf ein zweites Ausführungsbeispiel einer erfindungsgemäßen Pedalvorrichtung mit einem Teilschnitt des Gehäuses von zwei gegenüberliegenden Seiten,
- Figur 7a-c: eine Schrittweise Darstellung der Pedalbewegung des zweiten Ausführungsbeispiels von der Nulllage in die Endlage,
- Figur 8: eine perspektivische Darstellung des zweiten Ausführungsbeispiels von zwei unterschiedlichen Seiten bei Auftreten eines Fehlers in der Hemmeinrichtung,
- Figur 9: ein Ablaufdiagramm zur Steuerung der erfindungsgemäßen Pedalvorrichtung nach dem ersten und zweiten Ausführungsbeispiel, und
- Figur 10: ein Kraft-Winkel Diagramm zur Darstellung des Kraftverlaufs der erfindungsgemäßen Pedalvorrichtungen nach dem ersten und zweiten Ausführungsbeispiel.

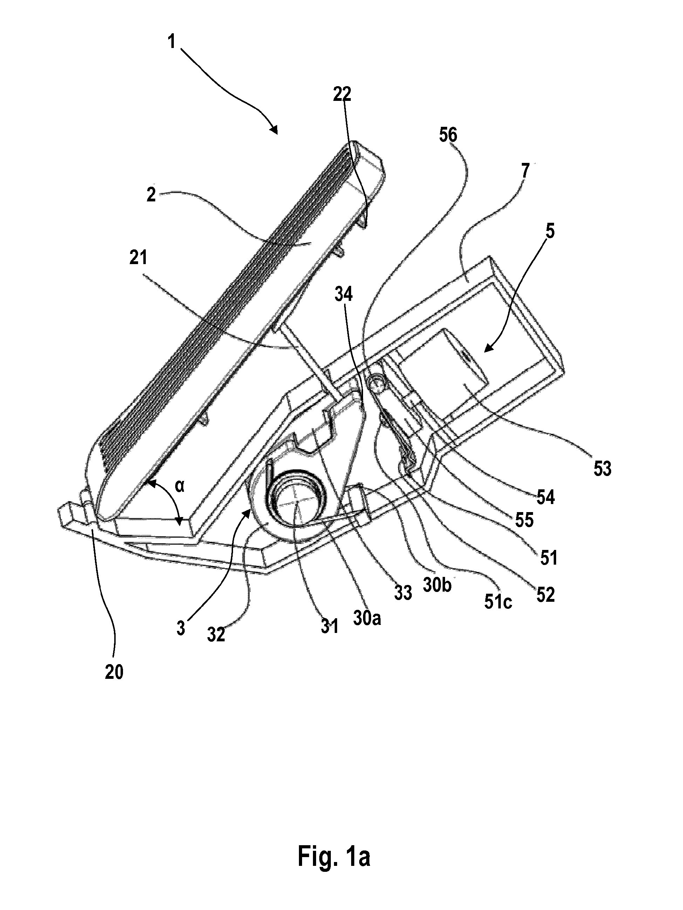

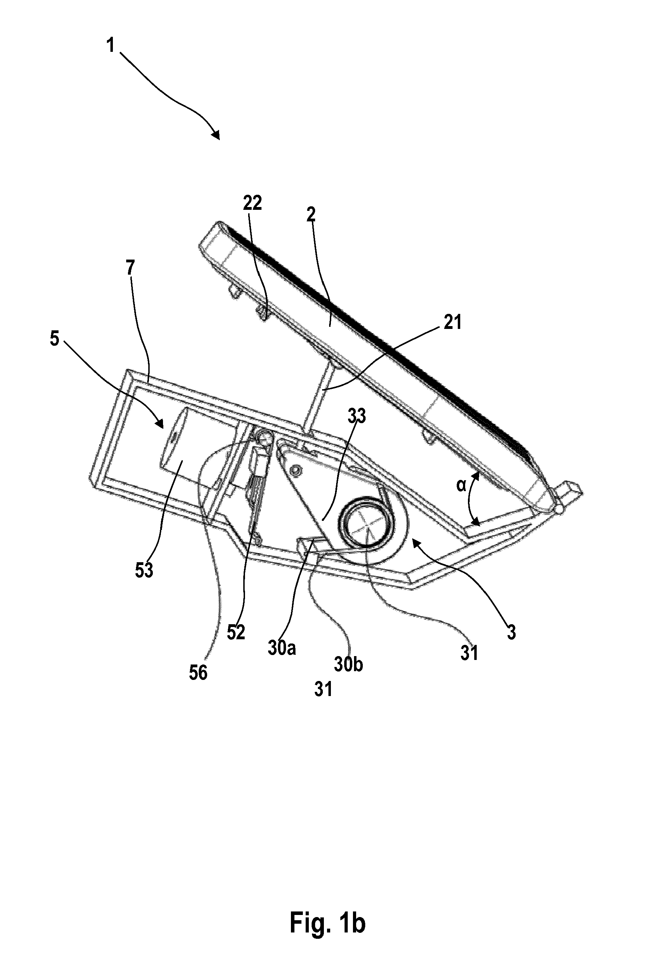

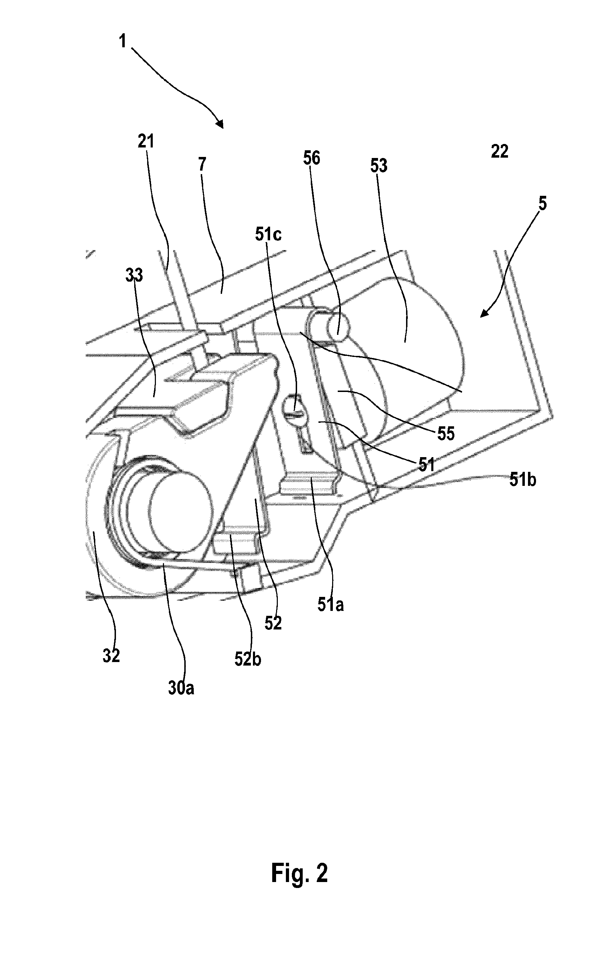

Die Figuren 1a bis 5 sowie die Figuren 6 bis 8 zeigen jeweils zwei unterschiedliche Ausführungsformen der erfindungsgemäßen Pedalvorrichtung 1, 100. Ein Unterschied zwischen den Ausführungsbeispielen ist u. a. darin zu sehen, dass sie unterschiedlich ausgebildete Hemmeinrichtungen aufweisen. Elemente gleicher Konstruktion oder Funktion sind figurenübergreifend mit den gleichen Bezugszeichen gekennzeichnet.

Die Pedalvorrichtungen 1, 100 beider Ausführungsbeispiele weisen eine Pedalplatte 2, die zwischen einer Nulllage und einer Endlage um eine erste Drehachse 20 um einen Winkel drehbar ist, zwei Rückstellfedern 30a, 30b zur Rückstellung der Pedalplatte 2 in die Nulllage und ein Übertragungselement 3 auf, das mit der Pedalplatte 2 gekoppelt ist und um eine zweite zur ersten Drehachse 20 parallele Drehachse 31 drehbar ist.

Ferner weisen die Pedalvorrichtungen 1, 100 eine Hemmeinrichtung 5, 150 zum Aufbringen einer der Drehbewegung der Pedalplatte 2 entgegenwirkenden punktuellen Hemmkraft auf, die in Abhängigkeit von der Winkelposition und bevorzugterweise auch von der Drehrichtung der Pedalplatte 2 zuschaltbar ist. Hierzu ist die Hemmeinrichtung 5, 150 mit einem verstellbaren Stützelement 51, 151 ausgestattet, das in die Drehbewegungstrajektorie des Übertragungselements 3 verstellbar ist, so dass es zwangsläufig zu einem Kontakt zwischen dem Übertragungselement 3 und dem Stützelement 51 bzw. 151 kommt, wenn das Übertragungselement 3 aufgrund der Bewegung der Pedalplatte 2 nach unten gedrückt bzw. bewegt wird. Die Hemmeinrichtung 5, 150 weist einen Aktuator 53 auf, der an mehreren Haltepositionen stromlos oder nahezu stromlos bzw. energiearm arretierbar ist, um den Energieverbrauch sowie die Wärmeentwicklung zu minimieren. Durch entsprechende Stromzufuhr bzw. durch Anlegen einer Spannung an den Aktuator 53 wird die Hemmeinrichtung 5, 150 zwischen den Haltepositionen geschaltet. Der Aktuator 53 kann so eingestellt werden, dass es nur in Abhängigkeit des Pedalwinkels α bzw. Pedalhubs betätigt wird. Alternativ können auch weitere Größen, wie z. B. Drehrichtung der Pedalplatte 2, zur Steuerung der Hemmeinrichtungen 5, 150 berücksichtigt werden. Hierzu die Pedalvorrichtung 1, 100 mit einer Steuereinrichtung verbunden. Ferner ist es auch denkbar die Hemmeinrichtung so zu betreiben, dass sie zugeschaltet wird, sobald die Pedalplatte 2 sich in der Nulllage befindet.

Nachfolgend wird das erste Ausführungsbeispiel der erfindungsgemäßen Pedalvorrichtung 1 anhand der Figuren 1a bis 5 näher beschrieben.

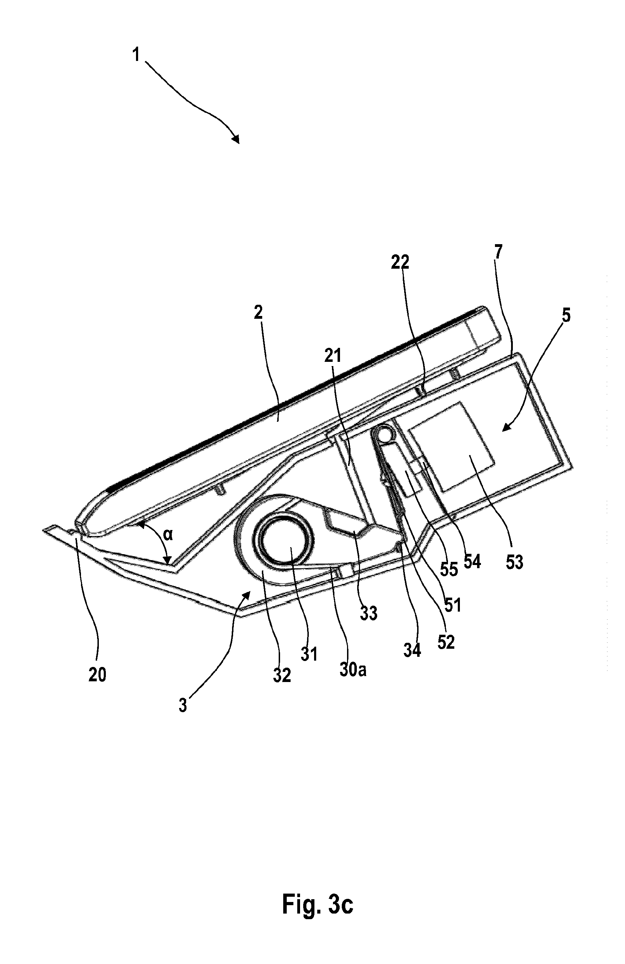

Die Pedalvorrichtung 1 ist als stehendes Pedal ausgebildet, wobei sich die Erfindung nicht auf diesen Art von Pedalvorrichtungen beschränkt. Die Pedalplatte 2 ist an einem Ende des Gehäuses 7 drehbar um die Drehachse 20 gelagert. Das andere Ende der Pedalplatte 2 ist freistehend und stützt sich mittels einer Übertragungstange 21 an den Übertragungselement 3 ab. Wie nachfolgend noch näher beschrieben, ist die Übertragungsstange mit einem zweiten Glied 33 des Übertragungselements 3 verbunden. Durch diese Kopplung wird die Pedalplatte Bewegung auf das Übertragungselement 3 übertragen. Am freien Ende der Pedalplatte 2 sind an deren Unterseite zwei Stützrippen 22 angeordnet, so dass die Pedalplatte 2, wie in Figur 3c gezeigt, auf einer Oberseite des Gehäuses 7 abgestützt wird bzw. eine Überbelastung der Pedalvorrichtung durch eine zu starke Pedalbetätigungskraft verhindert wird.

Das Gehäuse 7 ist länglich ausgebildet und weist einen Hohlraum auf, in der das Übertragungselement 3 sowie die Hemmeinrichtung 5 angeordnet sind. Wie in den Figuren zu sehen, ist die Hemmeinrichtung 5 entlang der Längsrichtung des Gehäuses 7 benachbart zum Übertragungselement 3 angeordnet, so dass jeweils das Stützelement 51 in die Drehbewegungstrajektorie des Übertragungselements 3 verstellbar ist.

Das Übertragungselement 3 hat eine tropfenförmig ausgebildete Grundform mit einer an einem Ende kugelförmigen Form, die zum anderen Ende hin spitz zuläuft. Im Bereich des kugelförmigen Endes ist das Übertragungselement 3 um die Drehachse 31 drehbar gelagert. Es weist zwei voneinander unabhängig bewegbare Glieder 32, 33 mit einer im Wesentlichen gleichen Grundform auf. Die Glieder 32, 33 sind jeweils mit den Rückstellfedern 30a, 30b gekoppelt, hier in Form einer Drehfeder 30, die die Glieder 32, 33 des Übertragungselements 3 in Richtung der Nulllage verdrehen, wenn keine Pedalbetätigungskraft auf die Pedalplatte 2 ausgeübt wird.

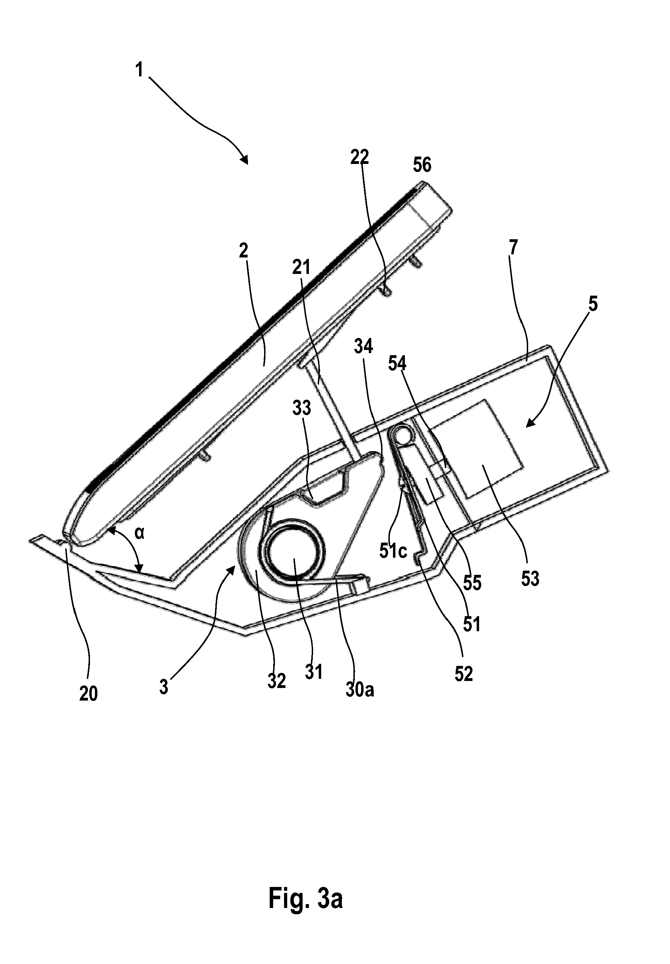

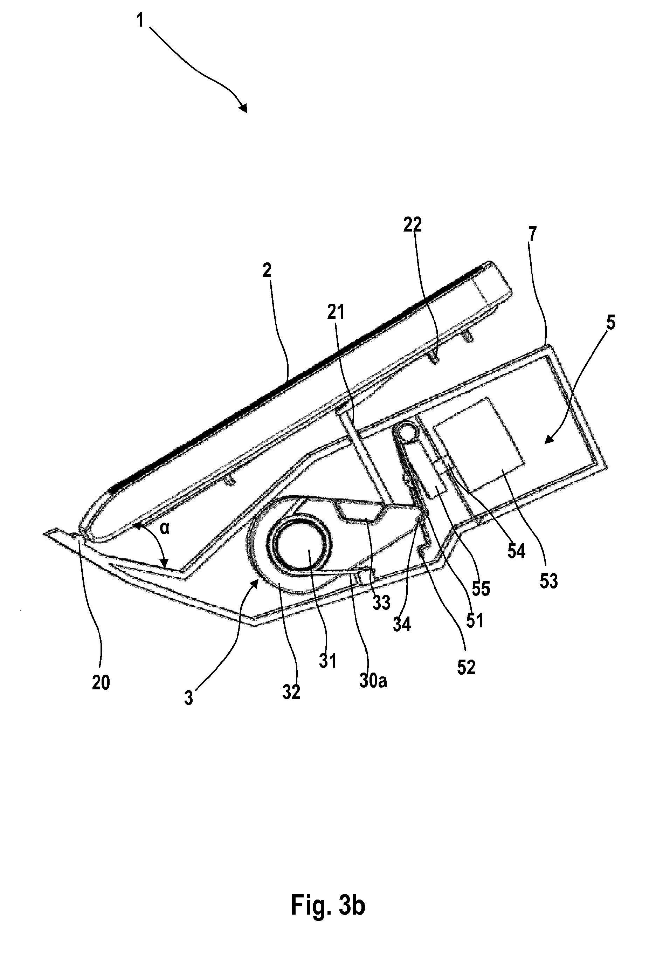

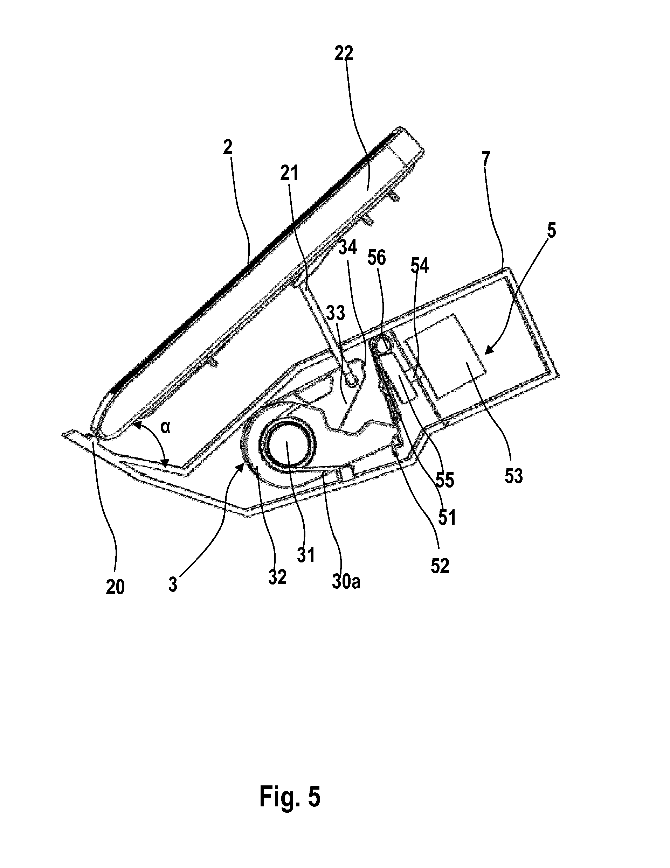

Das spitze Ende des Übertragungselements 3 ist dazu ausgebildet mit der Hemmeinrichtung 5 zusammenzuwirken. Hierzu weist das spitze Ende eine Abstufung 34 auf (siehe Figur 3), dessen Form entsprechend zu den Stützelementen 51, 52 ausgebildet ist. Die Glieder 32, 33 sind dabei derart dimensioniert und positioniert, um paarweise mit einem der Stützelemente 51, 52 zusammenzuwirken, wie in Figur 3 vergrößert dargestellt. Die zweigliedrigen Ausbildung des Übertragungselements 3 dient zudem auch dazu die Rückführung der Pedalplatte 2 in die Nulllage in dem Fall zu ermöglichen, dass die Rückführung der Glieder 32, 33 in die Nulllage durch die Hemmeinrichtung 5 verhindert wird, wie in Figur 5 dargestellt. Hierzu wird auf die weitere Beschreibung zur Figur 5 verwiesen.

Die Hemmvorrichtung 5 umfasst den Aktuator 53 und zwei Stützelemente 51, 52. Der Aktuator 53 ist an dem Gehäuse 7 gelagert (in den Figuren nicht gezeigt) und ist mittels eines Stellelements 54 und einem Stützkörpers 55 mit dem verstellbaren Stützelement 51 gekoppelt. Das zweite nicht verstellbare Stützelement 52 ist benachbart zu dem verstellbaren Stützelement 51 angeordnet. Beide Stützelemente 51, 52 sind um eine dritte Drehachse 56 leicht drehbar gelagert.

Die Stützelemente 51, 52 sind blattfederförmig ausgebildet und weisen am freien Ende jeweils einen gebogenen Abschnitt 51a, 52a auf, die jeweils mit den spitzen Enden der Glieder 32, 33 des Übertragungselements 3 zusammenwirken. Der gebogenen Abschnitt 51a, ist in einem Winkel von etwa 80° und der Abschnitt 52a in einem Winkel von etwa 90° zur Federfläche der Stützelemente 51, 52 gebogen. Denkbar sind auch andere Biegewinkeln im Bereich von 80° bis 120°. Wie in Figur 3 zu sehen, ist das verstellbare Stützelement 51 kürzer ausgebildet als das nicht verstellbare Stützelement 52, so dass das erste Glied 32 zuerst mit dem verstellbaren Stützelement 51 in Eingriff kommt und auf diese Weise eine zusätzliche zur Pedalbetätigungskraft entgegengesetzte Kraft vor Erreichen des zweiten Abschnitts 52a aufgebracht wird.

Zur Bewegung des verstellbaren Stützelementes 51 weist die Hemmvorrichtung 5 den Aktuator 53 auf, der an mehreren Haltepositionen energiearm arretierbar ist. Das Stellelement 54 ist in Form einer Welle ausgebildet, an deren Ende der Stützkörpers 55 angebracht ist. Der Stützkörper ist hier plattenförmig ausgebildet ist und stützt das Stützelement 51 flächig ab. Das Stellelement 54 wird von dem Aktuator 53 von einer Anfangsposition in eine Endposition bewegt. Der Stützkörper 55 ist mit dem Stützelement 51 über ein Befestigungsmittel 51c, das in diesem Ausführungsbeispiel als Schraube 51c ausgebildet ist, verbunden, so dass dieser mit dem Stellelement 54 und dem Stützkörper 55 mit verschoben wird und in die Drehbewegungstrajektorie des Übertragungselementes 19 verstellbar ist. Wie in Fig. 3 näher dargestellt, weist das Stützelement 51 eine Ausnehmung 51b in Form eines Langlochs auf, so dass beim Verschwenken um die Achse 56 oder Verformen des Stützelements 51 die Schraube 51c mit dem Stützkörper 51 sich entlang der Längserstreckung der Ausnehmung 51b bewegt.

Wird nun an den Aktuator 53 bedingt durch ein Steuersignal der Steuereinrichtung eine Spannung angelegt, so bewegt sich das Stellelement 54 in seine Endposition, wobei das Stützelement 51 sich um ihre Drehachse 56 dreht. Nach dem Erreichen dieser Position wird die Spannung am Aktuator 53 wieder ausgeschaltet, da für die Aufrechterhaltung der Endposition des Stellementes 54 keine zusätzliche elektrische Energie benötigt wird. Mit dem Ausfahren des Stellelements 54 verändert sich auch die Position des Stützkörpers 55, so dass das Stützelement 51 in eine Eingriffsposition bewegt wird.

Der Aktuator 53 ist als linearer bistabiler Aktuator ausgebildet, da bei diesen Aktuatoren die Position des Aktuators ohne elektrische Bestromung gehalten werden kann. Der Aktuator 53 wird von der Steuereinrichtung angesteuert. Um die thermischen Eigenschaften des Aktuators 5 abschätzen zu können und somit ein Überhitzen des Aktuators 5 zu verhindern, ohne jedoch einen zusätzlichen Temperatursensor einsetzen zu müssen, wird die Temperatur aus dem Vergleich des tatsächlich verbrauchten Stroms mit einem theoretischen Wert, der sich aus den Spuleneigenschaften des Aktuators wie Länge, Querschnitt, Widerstand und Induktivität ergibt, berechnet.

Anhand der Figuren 3a bis 3c sowie der Figur 4 und 10 wird die Wirkweise der Pedalvorrichtung 1 näher beschrieben.

Wenn ein Fahrzeugführer eines Fahrzeugs die Pedalplatte 2 der Pedalvorrichtung 1 mit seinem Fuß nach unten drückt, so verschiebt sich das Übertragungselement 3 und verschwenkt das zweite Glied 33, das formschlüssig mit dem ersten Glied 32 verbunden ist. Durch die formschlüssige Verbindung mit dem Glied 32 kann auf das erste Glied 32 in Pedalbetätigungsrichtung beim Herunterdrücken der Pedalplatte 2 eine Kraft ausgeübt werden. In der umgekehrten Richtung, d.h. beim Sichaufrichten der Pedalplatte 2 können sich beide Glieder 32, 33 unabhängig voneinander zurück in ihre Ausgangsposition. Im Normalfall wird das zweite Glied 33 vom ersten Glied 32 mit in die Ausgangslage gedrückt.

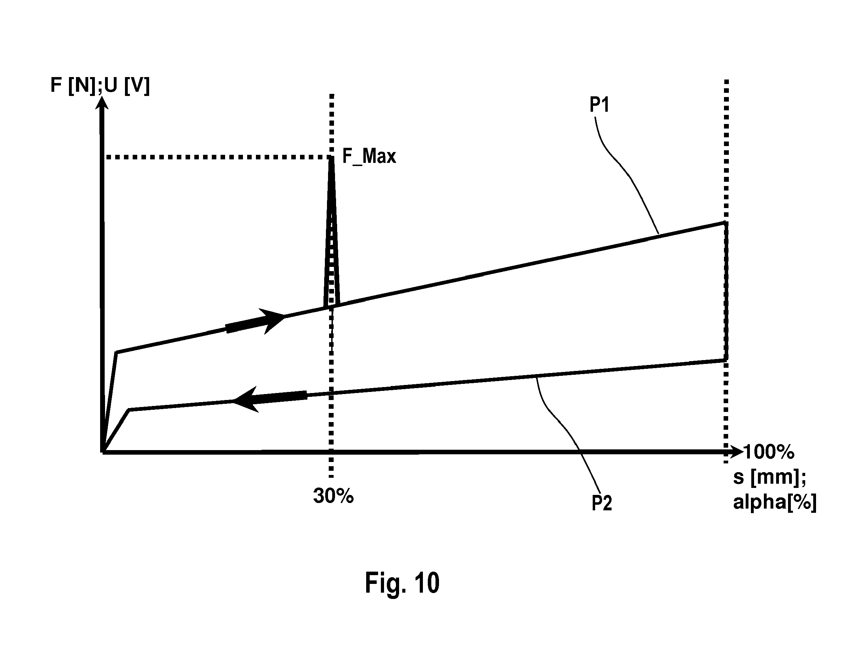

Das Herunterdrücken der Pedalplatte 2 bewirkt eine Einwirkung auf den Antriebsmotor des Kraftfahrzeugs, so dass sich dessen Antriebskraft erhöht. Bei den Antriebsmotoren kann es sich um einen Verbrennungsmotor oder um einen oder mehrere Elektromotoren handeln. Möglich sind auch Hybridmotoren. Löst der Fahrzeugführer seinen Fuß von der Pedalplatte 2, so bewirkt die Rückstellkraft eine Rückstellung der Pedalplatte 2 in ihre Ausgangposition bzw. Nulllage. Um die Geschwindigkeit des Fahrzeugs zu erhöhen, übt der Fahrer mit seinem Fuß eine Kraft auf die Pedalplatte 2 aus. Mit zunehmendem Winkel, um den die Pedalplatte 2 von der Nulllage bis zu einer Endlage ausgelenkt werden kann, erhöht sich die Geschwindigkeit des Fahrzeugs. Durch Rückstellfeder 30 wird eine erste Gegenkraft an der Pedalplatte 2 erzeugt, die sich durch die mit steigendem Pedalplattenwinkel erhöht (s. Figur 10).

In Fig. 10 ist die Kraft-Kennlinie an der Pedalplatte 2 dargestellt (durchgezogene Linie), die der die Pedalbetätigungskraft entgegenwirkt, gegen ihre Pedalhub in Prozenten aufgetragen. Der Pedalhub lässt sich je nach Pedalkonfiguration in einen entsprechenden Pedalwinkel umrechnen. Die mit einem nach rechts gerichteten Pfeil gekennzeichnete Linie stellt eine Geschwindigkeitserhöhung dar. Die anfängliche Gegenkraft im Bereich der Nulllage und die Steigung der Pedalkennlinie P1 wird im Wesentlichen durch die Federkonstante der Rückstellfedern 30a, 30b bestimmt.

Will der Fahrzeugführer die Geschwindigkeit seines Fahrzeugs verringern, so reduziert er die Kraft auf die Pedalplatte 2. Die Gegenkraft, mit der die Pedalplatte 2 auf den Fuß des Fahrzeugführers wirkt, wird nun um den Betrag, der durch die Rückstellfeder 30 erzeugt wird, reduziert. Diese Verringerung der Gegenkraft bei einer Umkehr des Pedalwinkels wird durch die Kennlinie P2 veranschaulicht. Die Gegenkraft der rücklaufenden Kennlinie P2 wird nun nur noch die Rückstellfedern 30a und 30b aufgebracht. Die durch die Rückstellfedern 30a und 30b ausgeübte Gegenkraft bewirkt, dass die Pedalplatte 2 in Kontakt mit dem Fuß des Fahrzeugführers bleibt.

Erfindungsgemäß kann diese Kennlinie P1 durch eine Zuschaltung der Hemmeinrichtung 5 verändert werden. Es ist vorgesehen, dass die Hemmeinrichtung bei einer Winkelposition von kleiner als 30% der Pedalplatte 2 und bei einer Drehrichtung der Pedalplatte 2 in Richtung der Endlage zugeschaltet wird und bei etwa 30% des Pedalhubs wirksam wird.

In Fig. 3a der Aktuator 53 in seiner Ausgangsposition dargestellt, in der das Stellelement 54 ausgefahren ist. Die Pedalplatte 2 befindet sich in ihrer Nulllage, so dass die beiden Glieder 32 und 33 sich an ihrer oberen Anschlagposition befinden.

Drückt nun der Fahrzeugführer die Pedalplatte 2 weiter nach unten, so bewegt sich die Pedalkennlinie zunächst entlang der in Fig. 10 dargestellten passiven Pedalkraftkennlinie P1 bis zur ersten Spitze der Pedalkraftkennlinie. In dieser Position (s. Figur 3b) greift das spitze Ende des ersten Gliedes 32 des Übertragungselements 3 mit der Abstufung in den gebogenen Abschnitt des Stützelements 51 ein. Auf diese Weise wird der erste Kick-Down Punkt abgebildet. Die weitere Bewegung des ersten Gliedes 32 wird zunächst verhindert und die Pedalkraft wächst an. In dieser Position verbleibt das Glied 32 so lange, bis der Fahrzeugführer eine zusätzliche Kraft F_Max aufgebracht hat, um das Glied 32 weiter nach unten zu drücken. Die Höhe dieser zusätzlichen Kraft F_Max hängt von der Formgebung und den Materialeigenschaften und der Steifigkeit der Blattfeder 51 ab. Durch die Wahl der Federkonstanten der Blattfeder 51 kann daher die Höhe einer gewünschten Kraftstufe eingestellt werden.

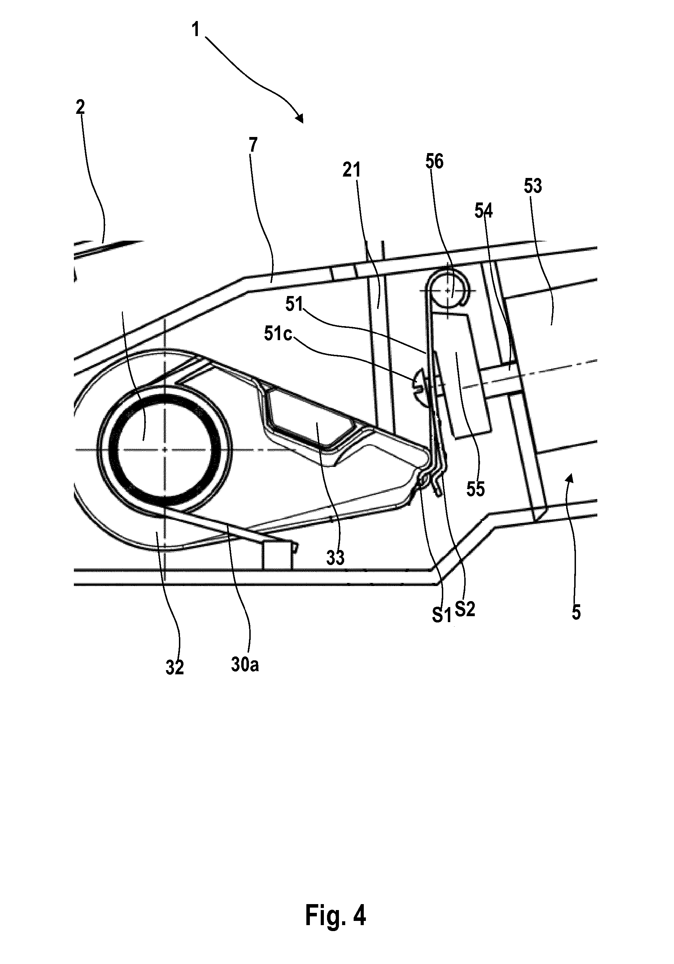

Wie in Fig. 4 näher dargestellt, bewegt sich die Blattfeder 51 des Stützelements 51 allmählich aus einer Position S1 in eine Position S2, wenn die Pedalplatte 2 weiter betätigt wird. Der Bereich um das freie Ende des Stützelement 51 gibt der Pedalbetätigungskraft nach und wird elastisch verformt, so dass das erste Glied 32 weiter nach unten gedrückt werden kann (s. dünnere Linie in Figur 4) . Die abgerundeten Katen des spitzen Endes sorgen dafür, dass das erste Glied 32 am Stützelement 51 entlang gleiten kann.

Hat der Fahrzeugführer diese Kraftstufe überwunden, so bewegt er sich wieder entlang der bekannten passiven Pedalkraftkennlinie P1, solange, bis der gebogene Abschnitt des zweiten Stützelements 52 in Eingriff mit dem spitzen Ende des zweiten Gliedes 33 kommt, das länger ausgebildet ist. Diese Position stellt den zweiten Kickdown-Position dar und bei diesem Ausführungsbeispiel das Ende des Pedalhubs dar, in der der Endwinkelanschlag der Pedalplatte 2 erreicht ist. Diese Position ist in Fig. 4c dargestellt. Zusätzlich zum zweiten Stützelement 52 liegt die Pedalplatte auf der Oberseite des Gehäuses auf, so dass auf diese Weise eine stabile Auflage der Pedalplatte beim Erreichen des vollständigen Pedalhubs sichergestellt wird.

Nachfolgend wird anhand der Figur 5 die Wirkweise des Übertragungselements 3 bei einem Fehlerfall beschrieben. Um einem möglichen Störfall durch den Ausfall des bistabilen Aktuators 53 oder dem Verschleiß bzw. der Beschädigung der mechanischen Komponenten der Hemmeinrichtung zu begegnen, bei der die Blattfeder 51 sich nicht in ihre Ursprungsposition zurückbewegen lässt und in ihrer zugeschalteten Position verbleibt, sind zwei unabhängig voneinander bewegbare Glieder 51, 52 vorgesehen. In einem solchen Störfall bzw. Blockierungsfall verbleibt das erste Glied 32 ungewollt in Eingriff mit der Blattfeder 51, während das zweite Glied 33 sich aus der Verbindung mit dem Glied 32 löst und die Pedalplatte 2 in ihre Nulllage zurückbewegen kann. Dies ist möglich, da die Übertragungsstange 21 nur mit dem zweiten Glied 33 verbunden ist. Das erste Glied 32 ist mit dem zweiten Glied 33 über eine Koppelungsfläche formschlüssig verbunden. Die formschlüssige Verbindung kann in Pedalbetätigungsrichtung eine Kraft erzeugen, um das Glied 32 zu betätigen. In umgekehrter Richtung können im Störfall beide Glieder 32, 33 unabhängig voneinander zurück laufen. Hierdurch ist sichergestellt, dass die Pedalplatte 2 entlang der passiven Kennlinie P2 zurückbewegt wird, auch wenn der Mechanismus zur Erzeugung der zusätzlichen Kraftstufe blockiert ist.

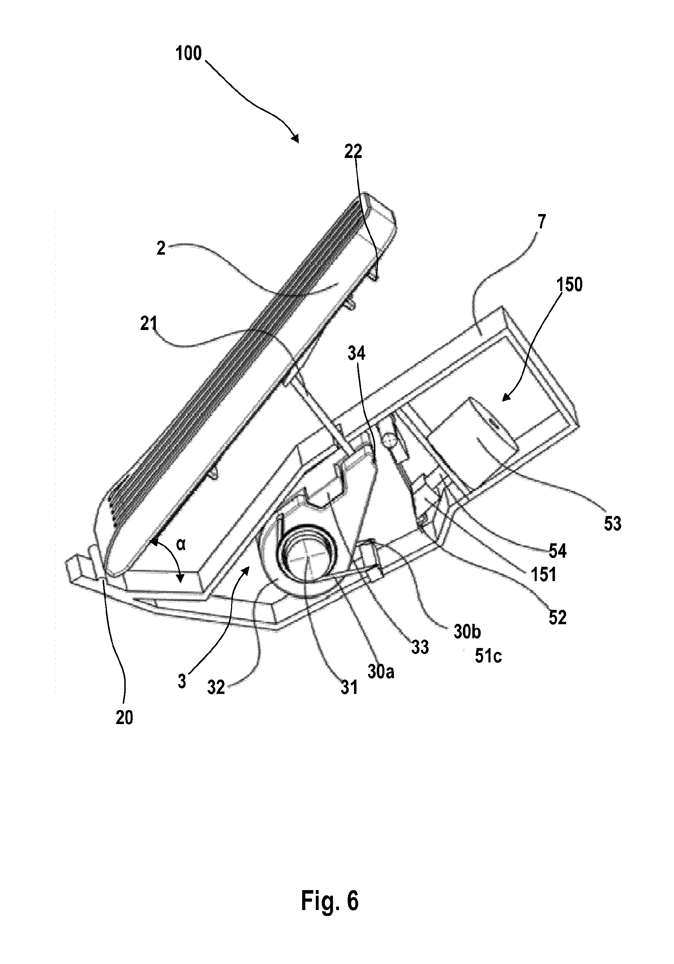

In Fig. 6 ist ein zweites Ausführungsbeispiel der Pedalvorrichtung dargestellt.

Die Hemmeinrichtung 150 weist wie im ersten Ausführungsbeispiel ein Stützelement 52 auf, das als Blattfeder ausgebildet ist und dessen Länge derart bemessen wird, so dass es mit dem zweiten Glied 33 des Übertragungselements 3 dann in Eingriff kommt, wenn der Pedalhub ausgeschöpft wurde.

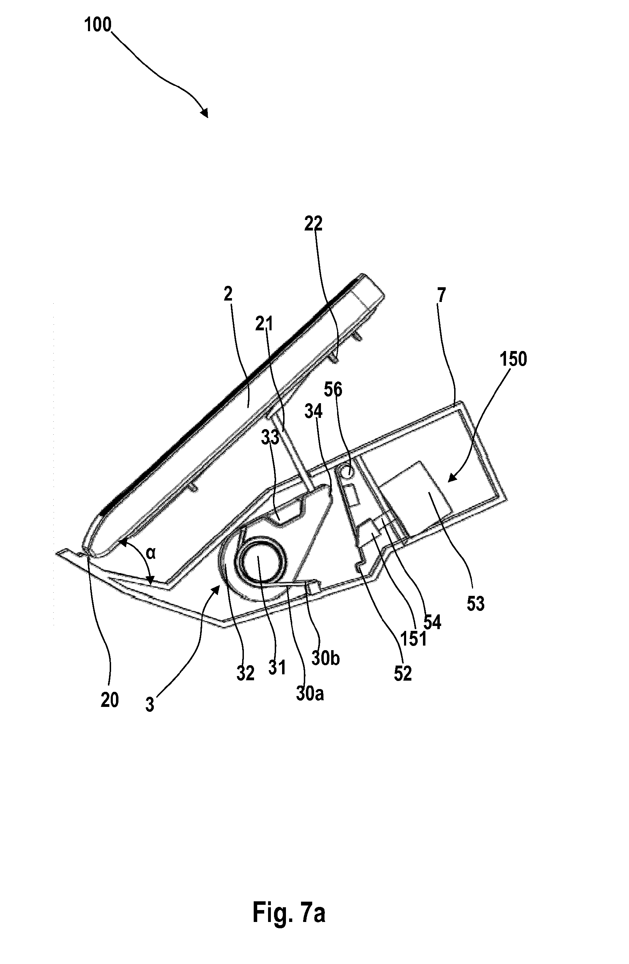

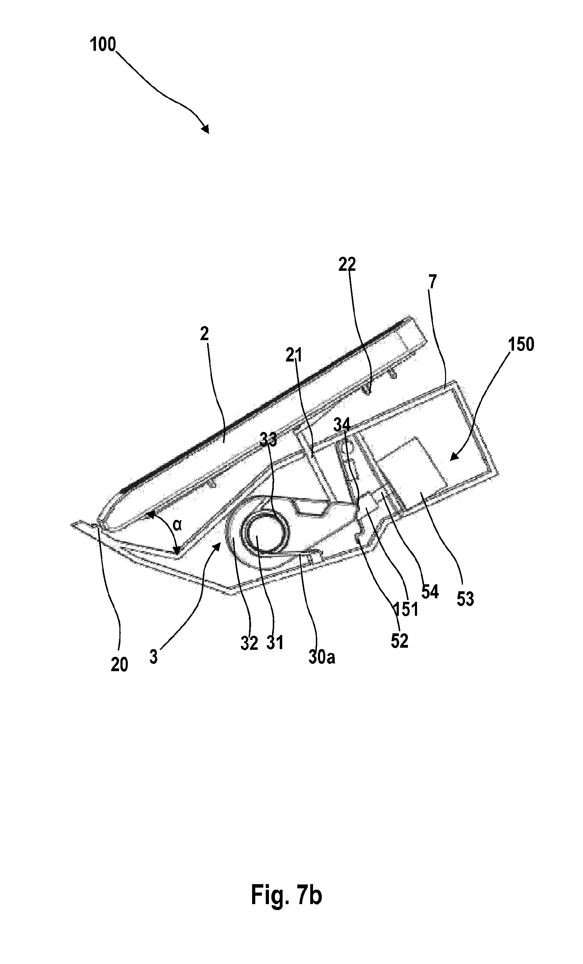

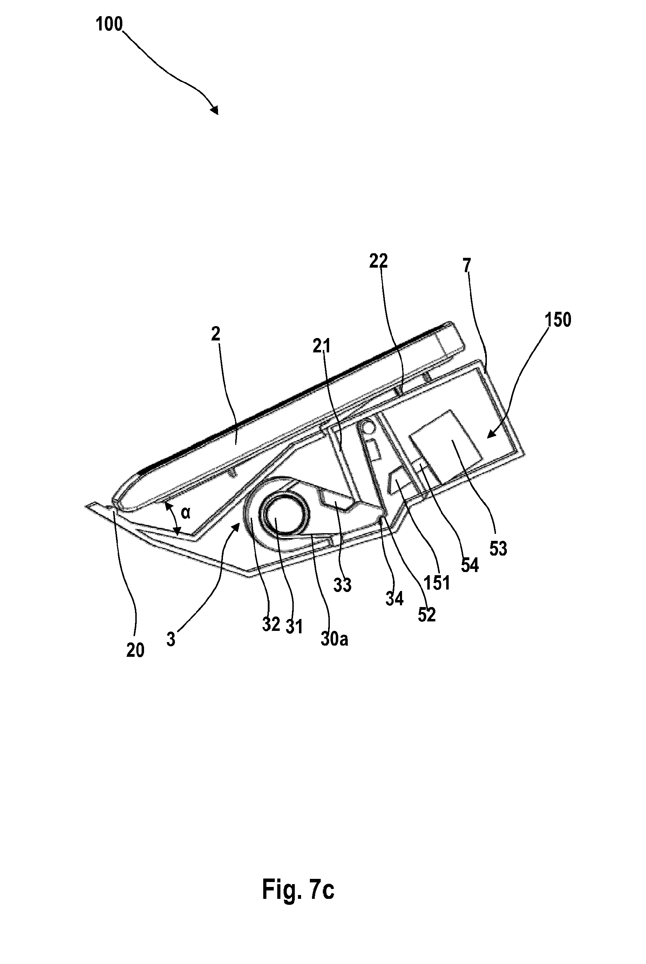

Zusätzlich dazu weist die Hemmeinrichtung 150 einen Aktuator 53 auf, der als linearer bistabiler Aktuator ausgebildet ist. Der Aktuator 53 ist mit einem verstellbaren Stellelement 54 in Form einer Welle 6 ausgestattet. An dem freien Ende des Stellelements 54 ist ein Stützelement 151 angebracht, das blockförmig ausgebildet ist und eine Kontaktfläche aufweist, an die das spitze Ende des ersten Gliedes 32 flächig anlegbar ist. Wie in Figur 7b zu dargestellt, ist die Kontaktfläche als eine zur Längsachse des Stellelements 54 schräg verlaufende Fläche ausgebildet und in etwa parallel zum spitzen Ende des ersten Gliedes 32 ausgerichtet. In den Figuren 7a und 7b befindet sich das Stellelement 54 in der ausgefahrenen Position, so dass das Stützelement 151 und das erste Glied 32 miteinander in Eingriff kommen können, wie in Figur 7b gezeigt. Sobald die Pedalbetätigungskraft im Wesentlichen die Kraftspitze F_Max erreicht hat, wird das Stellelement 54 zurückgezogen, so dass sich das erste Glied 32 weiter nach unten bewegen kann.

Im Gegensatz zum ersten Ausführungsbeispiel erfolgt hier die Abschaltung der Hemmeinrichtung 150 mittels einer aktiven Bewegung des Aktuators. Das zweite Ausführungsbeispiel ermöglicht es im Vergleich zum ersten Ausführungsbeispiel höhere Kraftspitzen für den ersten Kick-Down Punktes zu erreichen.

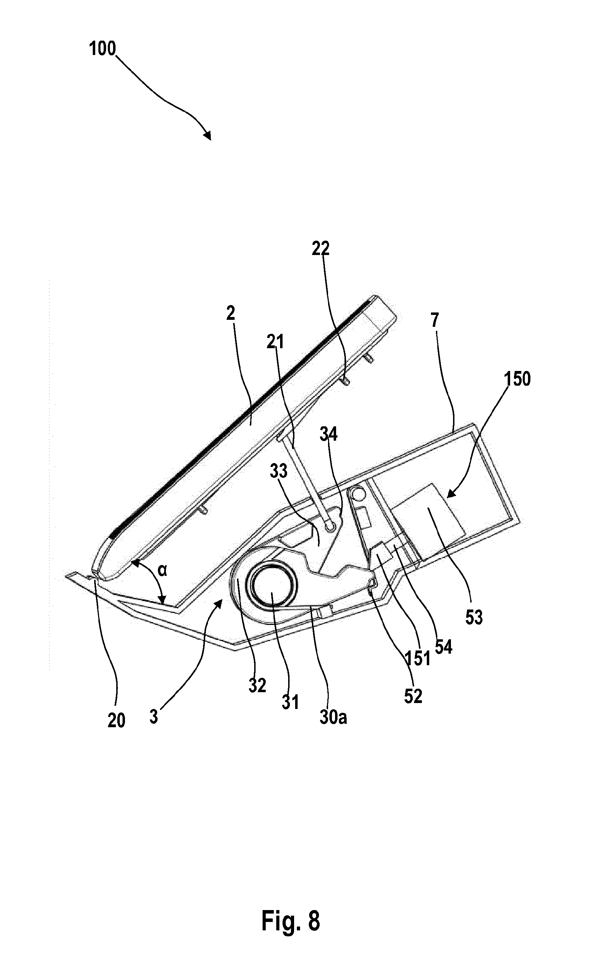

Für den Störfall, s. Figur 8, ist auch hier eine Zweiteilung des Hebelmechanismus in die beiden Glieder 32 und 33 vorgesehen. In diesem Blockierungsfall verbleibt das Glied 32 in Eingriff mit dem Stützelement 151, während das zweite Glied 33 sich von dem ersten Glied 32 löst und die Pedalplatte 2 in ihre Nulllage zurückbewegen kann.

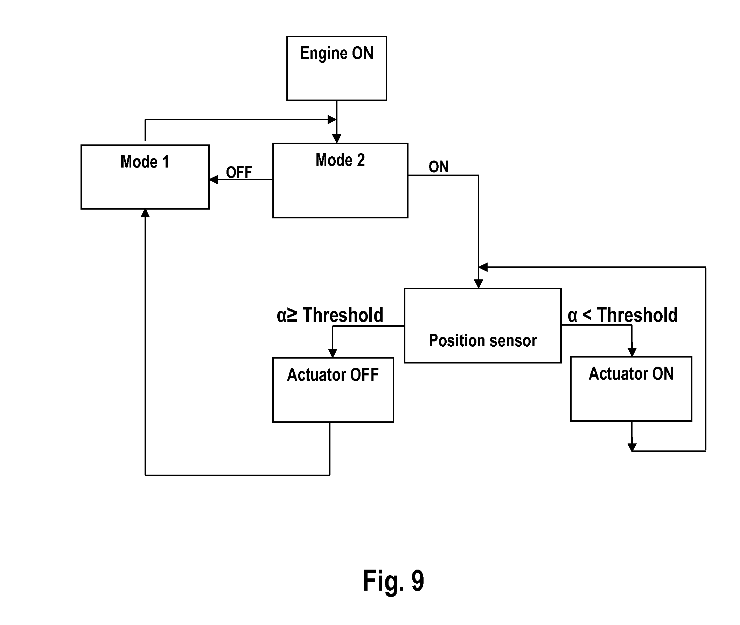

In Fig. 9 ist ein Ablaufdiagramm für das erfindungsgemäße Verfahren dargestellt, das auf beide Ausführungsbeispiele zutrifft.

Nach dem Starten des Motors des Fahrzeugs wird abgefragt, in welchem Modus die Pedalvorrichtung 1, 150, betrieben werden soll. In einem ersten Modus wird die Pedalvorrichtung 1, 150 ohne die Hemmeinrichtung 5, 150 eingesetzt. In einem zweiten Modus kommt die Hemmeinrichtung 5, 150 zum Einsatz. Die Entscheidung welcher Modus zum Einsatz kommt, kann unter anderem anhand einer Fahrzeugeinstellung erfolgen. Beispielsweise kann der zweite Modus aktiviert werden, wenn das Fahrzeug so eingestellt ist, um eine kraftstoffsparende Fahrweise zu unterstützen.

Wenn der zweite Modus aktiviert ist, wird die Position der Pedalplatte 2 ermittelt, z. B. durch einen Positionssensor. Wenn festgestellt wird, dass die Pedalplatte 2 sich unterhalb eines einstellbaren Grenzwertes befindet, wird der Aktuator aktiviert, so dass die Hemmeinrichtung 5, 150 zugeschaltet wird und die Stützelemente 51, 151 in die Position verstellt werden und mit dem Übertragungselement 3 in Eingriff kommen können. Die Position der Pedalplatte 2 wird laufend abgefragt. Wird dabei festgestellt, dass sich die Position der Pedalplatte gleich oder größer als ein Grenzwert ist, wird der Aktuator 53 abgeschaltet und die Pedalvorrichtung 1 in den ersten Modus versetzt. Danach wird wieder die Abfrage durchgeführt, ob der Modus 2 aktiviert ist.

## Patentansprüche

1. Pedalvorrichtung (1, 100) für ein Kraftfahrzeug, insbesondere zur Steuerung einer Fahrzeuggeschwindigkeit, aufweisend
- eine Pedalplatte (2), die zwischen einer Nulllage und einer Endlage um eine erste Drehachse (20) um einen Winkel (α) drehbar ist,
- mindestens eine Rückstellfeder (30a, 30b) zur Rückstellung der Pedalplatte (2) in die Nulllage,
- ein Übertragungselement (3), das mit der Pedalplatte (2) gekoppelt ist und um eine zweite zur ersten Drehachse (20) parallele Drehachse (31) drehbar ist, und
- eine Hemmeinrichtung (5, 150) zum Aufbringen einer der Drehbewegung der Pedalplatte (2) entgegenwirkenden punktuellen Hemmkraft,
**dadurch gekennzeichnet, dass** die Hemmeinrichtung (5, 150) in Abhängigkeit von der Winkelposition der Pedalplatte (2) zuschaltbar ist.

2. Pedalvorrichtung (1, 100) nach Anspruch 1, **dadurch gekennzeichnet, dass** die Hemmeinrichtung (5, 150) in Abhängigkeit von der Winkelposition und der Drehrichtung der Pedalplatte (2) zuschaltbar ist.

3. Pedalvorrichtung (1, 100) nach einem der vorstehenden Ansprüche, **dadurch gekennzeichnet, dass** die Hemmeinrichtung (5, 150) ein verstellbares Stützelement (51, 151) aufweist, das in die Drehbewegungstrajektorie des Übertragungselement (3) verstellbar ist.

4. Pedalvorrichtung (1, 100) nach einem der vorstehenden Ansprüche, **dadurch gekennzeichnet, dass** die Hemmeinrichtung (5, 150) einen Aktuator (53) aufweist, der an mehreren Haltepositionen stromlos arretierbar ist.

5. Pedalvorrichtung (1, 100) nach dem vorstehenden Anspruch, **dadurch gekennzeichnet, dass** der Aktuator (53) ein linearer bistabiler Aktuator ist.

6. Pedalvorrichtung (1) nach einem der vorstehenden Ansprüche, **dadurch gekennzeichnet, dass** das Stützelement (51) blattfederförmig ausgebildet ist und mindestens einen gebogenen Abschnitt (51a) zum Ausüben der Hemmkraft aufweist.

7. Pedalvorrichtung (1) nach einem der vorstehenden Ansprüche, **dadurch gekennzeichnet, dass** das der Aktuator (53) einen Stützkörper (55) aufweist, der das Stützelement (51) flächig abstützt.

8. Pedalvorrichtung (100) nach einem der Ansprüche 1 bis 5, **dadurch gekennzeichnet, dass** der Aktuator (53) eine verstellbare Welle (54) mit einem Stützelement (151) aufweist.

9. Pedalvorrichtung (1, 100) nach einem der vorstehenden Ansprüche, **dadurch gekennzeichnet, dass** das Übertragungselement (3) mindestens zwei voneinander unabhängig um die zweite Drehachse (31) drehbare Glieder (32, 33) aufweist, und dass mittels des zweiten Glieds (33) nur eine zur Endlage gerichtete Kraft auf das erste Glied (32) übertragbar ist, und dass mittels des ersten Glieds (32) nur eine zur Nulllage gerichtete Kraft übertragbar ist.

10. Pedalvorrichtung (1, 100) nach dem vorstehenden Anspruch, **dadurch gekennzeichnet, dass** die Pedalplatte (2) nur mit dem zweiten Glied (33) des Übertragungselements (3) gekoppelt ist.

11. Pedalvorrichtung (1, 100) nach einem der Ansprüche 9 oder 10, **dadurch gekennzeichnet, dass** das zweite Glied (33) einen Vorsprung aufweist, das in eine Aussparung am ersten Glied (32) eingreift, um eine zur Endlage gerichtete Kraft auf das erste Glied (32) auszuüben.

12. Pedalvorrichtung (1, 100) nach einem der vorstehenden Ansprüche, **dadurch gekennzeichnet, dass** die Hemmeinrichtung vor Erreichen einer Winkelposition zuschaltbar ist, der etwa die Hälfte einer maximalen Motorleistung des Kraftfahrzeugs entspricht.

13. Verfahren zum Betrieb einer Pedalvorrichtung (1, 100) für ein Kraftfahrzeug, insbesondere zur Steuerung einer Fahrzeuggeschwindigkeit, mit einer Pedalplatte (2), die zwischen einer Nulllage und einer Endlage um eine erste Drehachse (20) um einen Winkel (α) drehbar ist, mindestens einer Rückstellfeder (30a, 30b) zur Rückstellung der Pedalplatte (2) in die Nulllage, und einem Übertragungselement (3), das mit der Pedalplatte (2) gekoppelt ist und um eine zweite zur ersten Drehachse (20) parallele zweite Drehachse (31) drehbar ist, aufweisend die Schritte:
- Prüfen, ob die Pedalplatte (2) sich innerhalb eines vorgegebenen Winkelbereichs befindet, und
- Zuschalten einer zuschaltbaren Hemmeinrichtung (5, 150) zum Aufbringen einer der Drehbewegung der Pedalplatte (2) entgegenwirkenden Hemmkraft, wenn sich die Pedalplatte (2) innerhalb eines vorgegebenen Winkelbereichs befindet.

14. Verfahren nach Anspruch 14, **dadurch gekennzeichnet, dass** die Hemmeinrichtung (5, 150) im zugeschalteten Zustand befindet, wenn sich die Pedalplatte (2) innerhalb eines Winkelbereichs befindet, und andernfalls sich im nicht zugeschalteten Zustand befindet.

15. Kraftfahrzeug mit einer Pedalvorrichtung (1, 100) nach einem der Ansprüche 1 bis 12.
